# EUROPEAN PATENT SPECIFICATION

(11) **EP 0 306 903 B1**
(45) Date of publication and mention of the grant of the patent: **07.12.1994**
(21) Application number: 88114554.4
(22) Date of filing: 07.09.1988
(51) Int. Cl.: C08J 5/04, C08K 3/22, C08K 3/26

(54) **Impact resistant filler-containing polymer/elastomeric fiber composites**
Schlagfeste, füllstoffhaltige Verbundstoffe aus Polymeren und elastomeren Fasern
Matériaux composites à base de polymères et de fibres élastomères résistant aux chocs et contenant des charges

(30) Priority: 11.09.1987 US 96098
(43) Date of publication of application: 15.03.1989
(73) Proprietor: E.I. DU PONT DE NEMOURS AND COMPANY, Wilmington Delaware 19898 (US)
(72) Inventor: Howard, Edward George, Jr., Hockessin Delaware 19707 (US)
(74) Representative: von Kreisler, Alek, Dipl.-Chem.

(56) References cited:
- US-A- 4 612 241

## Description

### Field of the Invention

This invention relates to composites having improved impact resistance and heat formability.

### BACKGROUND OF The INVENTION

Many modern plastics lack sufficient strength for use as structural materials. The reinforcement of otherwise unsuitable plastics with fibers of glass, boron, graphite, and metal is known in the art. Reinforced plastics are replacing conventional materials in a variety of applications, including load-bearing structural members. The shift in choice is based on economic advantages, simplified fabrication, freedom from corrosion, and lower weight. The preparation of stronger, lighter materials with high impact resistance is a highly desirable objective.

U.S.-A-3,817,806, discloses a method for prestressing reinforced thermoset resins. Fibers held under tension are encapsulated with thermosetting resin. The reinforced resin may be formed into rigid structures. The patentees disclose the use of fiberglass fibers with ester based, acid based, or amine based resin. Shaped materials prepared by the disclosed method are disclosed as having structural integrity and a tendency to resist deformation.

U.S.-A-3,709,754, discloses a method of preparing construction members of glass fibers impregnated with a hardened resin. Layers of glass fiber fabric impregnated with a hardenable resin are wrapped around glass fiber rods bounded together under tension with hardened binder resin. Construction members prepared by the disclosed method demonstrate high strength and resistance to lateral bending and flexing.

U.S.-A-3,686,048, discloses a process for preparing multilayer fiber reinforced structures. Parallel fibers are bonded together under tension with a small amount of thermoplastic or thermosetting resin and heated to form a flexible sheet. The sheet comprises a web of fibers connected by resin bridges. A liquid thermoplastic or thermosetting matrix is applied to single or multiple layers of the reinforcing sheets to form fiber reinforced structures. The patentee specifically discloses the preparation of sheets with glass fibers.

U.S.-A-4,612,241, discloses an impact resistant composite consisting essentially of a polymer or polymer precursor and oriented thermoplastic elastomeric fibers. The polymer or polymer precursor forms, without the elastomeric fibers, a neat polymer matrix having an elongation of less than about 10%. The thermoplastic elastomeric fibers are, during preparation of the composite, embedded in the polymer or polymer precursor under from about 0 tension to tension only sufficient to eliminate slack, capable of shrinking, and present in the composite in an amount of from 1 to 95 percent by weight of composite. The composite has an elongation of at least 10% greater than the elongation of the neat polymer matrix.

### SUMMARY OF THE INVENTION

The present invention provides an impact resistant, heat formable composite comprising
- a polymer selected from the group consisting of addition polymers and addition copolymers,
- fillers selected from the group consisting of metal oxide, metal carbonate and mixtures thereof, provided said metal is not an alkali metal and
- oriented thermoplastic elastomeric fibers having a draw ratio of 1.2 to 4.5 characterised in that the composite contains 30 to 80 % by weight, based on the composite, of one or more fillers.

### DETAILED DESCRIPTION OF THE INVENTION

The composites of the present invention have improved impact resistance over similar compositions without elastomeric fibers. In addition, the composites of the present invention have higher tensile modulus and hardness compared to similar compositions without filler. The composite is able to tolerate stresses and impacts that would destroy the filler-containing polymer. In addition, the composites of the present invention are heat formable.

The composite of the present invention comprises filler-containing polymer and oriented thermoplastic elastomeric fibers. As used herein, the expression "thermoplastic elastomeric fibers" means fibers prepared from thermoplastic polymer that posses elastomeric memory, and become soft and moldable by heat. The thermoplastic elastomeric fibers absorb and distribute forces applied to the composite, and the polymer matrix serves to maintain shape and to help in distributing forces uniformly to the fibers. The polymer filler enhances the impact resistance of the resulting composite.

Thermoplastic elastomeric fibers suitable for use in the present invention should be capable of generating tension from 0.0089 to 1.78 cN/dtex (0.01 to 2 g/denier). Bonding between the polymer and the fibers allows the fibers to retain tension in the resulting composite. The placement of the fibers in the polymer matrix is not critical. The fibers are embedded in a polymerizable polymer precursor, containing an appropriate filler, which is then polymerised to form the composite of the invention. The fibers embedded in polymer precursor develop tension as the precursor is polymerized. Tension developed in the composite exceeds that necessary to eliminate slack in the free fibers and generally will be at least 0.0089 cN/dtex (0.01 g/denier). The fiber content of the resulting composite can be from 0.5% to 50% by weight, preferably from 1% to 20% by weight, and more preferably 1% to 10% by weight. A fiber content of 5% is most preferred. The composite can be prepared in a variety of forms including sheets and blocks. Sheets of the composite can be heat-formed into curved structures having structural integrity.

In the composite of the present invention, the polymer matrix can be a thermoplastic or thermosetting polymer. Polymers suitable for the composite should be compatible with and adhesive to the thermoplastic elastomeric fiber. Preferably, the polymer matrix is amorphous or semicrystalline thermoplastic. The polymer matrix may be selected from addition polymers selected from the group consisting of polystyrene, polymethacrylate esters such as, polymethyl methacrylate and polybutyl methacrylate, polyacrylate esters such as polyethyl acrylate and polybutyl acrylate, thermoset polyester, and epoxy. Preferably, the addition polymer matrix is polystyrene or polymethyl methacrylate. The polymer matrix may also be selected from addition copolymers selected from the group consisting of copolymers of methyl methacrylate and butyl methacrylate, copolymers of styrene and methyl methacrylate, copolymers of methyl methacrylate and a polyfunctional addition monomer, and copolymers of styrene and a polyfunctional addition monomer. Illustrative polyfunctional addition monomers are methacrylate esters of pentaerythritol, tris(hydroxymethyl)ethane, and glycols. Preferred addition monomers include compounds of the formula 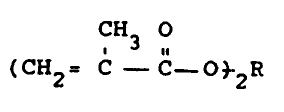
wherein
R is 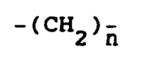
wherein
n > 1.
Preferably, the monomer is a compound wherein n=2, namely ethylene glycol dimethacrylate. Preferably, the addition copolymer matrix is a copolymer of methyl methacrylate and ethylene glycol dimethacrylate. It will be appreciated that this preferred copolymer will be methyl methacrylate cross-linked by ethylene glycol dimethacrylate.

Suitable fillers include metal oxides, metal carbonates, and mixtures thereof, wherein the metal is other than an alkali metal. Preferred metal oxides are Al₂O₃ · 3H₂O, Al₂O₃ and SiO₂. In addition, clays according to the formula

[Al₂O₃] · [SiO₂]ₙ · XH₂O

wherein n is an integer from 1 to 7.4 and X is an integer from 0 to 4 are suitable. Preferred metal carbonates are CaCO₃, MgCO₃ and ZnCO₃.
The most preferred filler is Al₂O₃ · 3H₂O.
The filler may be used in a weight range of from 30% to 80%. More preferred is 40% to 70%, and most preferred is 50% to 65%.

In the composite of the present invention suitable thermoplastic elastomeric fibers are oriented and capable of developing tension when embedded in the polymerizing polymer precursor. Suitable thermoplastic elastomeric fibers can be prepared from any polymer that consists of a soft elastomeric segment and a hard crystalline segment. A partial list of suitable soft segments includes polytetramethylene oxide, ethylene oxide, polydienes, polyaliphatic diacid esters with aliphatic diols and copolymers of propylene oxide and tetrahydrofuran. A partial list of suitable hard segments includes polyurethanes, terephthalates, isophthalates, and polyamides. Fibers suitable for the present invention should adhere to the polymer matrix, and should be capable of shrinking when heated or exposed to organic solvents or monomers. The melting point of the fibers should be greater than the temperature required to prepare the composite. In addition, selected fibers should not be capable of dissolving in the polymer or polymer precursor. Preferred fibers are selected from the group consisting of polyester elastomers, such as polytetramethylene terephthalate, polyester/polyether elastomers, polyamide/polyester/polyether elastomers, and polyester/polyurethane elastomers. Most preferably, the fibers are polyester/polyether elastomers. Preferred polyester/polyether elastomers are described in U.S.-A-3,763,109; 3,766,146; and 3,651,014, The polyester/polyether elastomers and polyester/polyurethane elastomers are available commercially from E. I. du Pont de Nemours and Company under the registered trademarks Hytrel® and Lycra®. The copolymers of butylene adipate and meta-phenylene diisocyanate/butanediol are available commercially from B. F. Goodrich Chemical Co. under the registered trademark Estane®. The elastomeric fibers should be oriented, preferably having a draw ratio of from 1.2 to 4,5. In general, a higher orientation, i.e., a higher draw ratio, will result in a composite having a higher impact resistance. In general, orientation may be produced by pulling the fiber. Individual filaments in the fibers should have 0.111 tex to 1.11 tex (a denier of 1 to 10). Sheath/core fibers prepared from combinations of two different elastomers by procedures well-known in the art are also suitable.

In general, composites according to the present invention may be prepared according to the following general procedure.
(1) A mix of polymer precursor, filler and polymerization initiator is prepared and maintained at a temperature of about 0°C. Advantageously, a sufficient amount of polymer is dissolved in the mix to both increase the viscosity of the mix and to lower the heat of polymerization;
(2) The mix is then poured into a mold which is advantageously lined with a release film such as polyvinyl alcohol;
(3) Elastomeric fibers are then sprayed onto the surface of the mix by feeding the fibers through an aspirator which is fed with compressed air. Alternatively, the fibers may be uniformly dispersed throughout the mix. If desired, the fibers may be carefully placed onto the surface of the mix to ensure uniform alignment, which is not, however, critical to the invention;
(4) The mix -- if covered with a top layer of fibers -- is covered with a top layer of mix and covered with a release film such as polytetrafluoroethylene (Teflon® available from E. I. du Pont de Nemours & Co., Inc., Wilmington, Delaware). The top layer of mix is forced into the fiber layer by any convenient means such as a roller;
(5) A thermocouple is attached to the surface to monitor the reaction temperature, and the whole mold is wrapped with insulation to conserve the heat of polymerization. The temperature will usually reach about 100°C in a matter of minutes, at which point the polymerization is complete and the composite fully prepared.
(6) The resulting composite is removed from the mold and is cut into desired shapes. If desired, the composite can be thermally formed into curved shapes by heating to about 140°C.

The invention is further described by the following examples in which all parts and percentages are by weight and degrees are Celsius.

### Example 1

A composite was prepared with a matrix of cross-linked polymethyl methacrylate containing 65% alumina trihydrate powder and polyester/polyether elastomeric fibers prepared from a polymer sold commercially by E. I. du Pont de Nemours and Company under the registered trademark Hytrel® (type 7246). The fibers were prepared by melt spinning and oriented by extending the cooled fiber. The oriented fiber had a draw ratio of about 3. Two metal frames (15 cm x 15 cm x 0.84mm (33 mil)), each with a 9 cm x 9 cm hole cut out in the center, were placed together to form a frame of double thickness. Seventeen grams of Hytrel® type 7246 fiber were wound around the double frame to cover over both sides of the hole. A flat Teflon® (polytetrafluoroethylene) plate was attached to each face of the fiber-wrapped frames with epoxy cement, which was applied around the frames near the edges of the faces. After the epoxy cement cured, the two frames were separated by cutting the fibers where the two frames were joined. The Teflon® plates were removed, leaving the fibers held in place on the frames by the epoxy cement. Each resulting frame had a single layer of uniformly aligned attached fibers. A shallow box, large enough to accomodate the frames, was lined with a release film of polyvinyl alcohol. A mixture consisting of 975 grams of aluminum trihydrate, 497 grams of methyl methacrylate monomer containing 20% polymethyl methacrylate (MW 50,000), 1% ethylene glycol dimethacrylate, and 28.11 grams of free radical initiator were poured into the shallow boxes. The mixture was covered with polyvinyl alcohol film and compacted with a squeegee roll. An exothermic reaction occurred which raised the temperature to 100°. A composite was formed after 20 minutes. The resulting composite contained 3.1% fiber. The fibers in the composite were quite close to one surface.

Test bars were cut from the composite to measure 2 in x 2 in x 1/4 in (5.1 cm x 5.1 cm x 0.6 cm). Both sides of the test bars were subjected to the Gardner Falling Dart Test. A piece of matrix material, prepared as described above -- but without fibers -- shattered when impacted with 3 inch pounds (10.34 Nm or 3.46 Kg cm) of impact. The composite made as described above withstood 0.981 Nm (10 inch pounds) without shattering. When impacted with 3 inch pounds (0.34 Nm or 3.46 Kg cm) or more, the composite developed cracks. Cracks always developed on the surface not receiving the impact. If the fibers were located close to the surface not receiving the impact, very fine cracks developed. If the fibers were located closer to the surface receiving the impact, much larger cracks developed only on the opposite surface.

In another test, pieces of composite and pieces of fiber free matrix material were heated to 140° and bent into "U" shapes. The matrix without fibers tore. The composite of the Example did not. Thus, flat sheets of composite can be hot-formed into curved shapes.

### Example 2

A composite was prepared as in Example 1 with the exception that the elastomeric fibers were arranged in a random manner, i.e., nonuniform alignment. The fibers were drawn into the suction arm of a glass aspirator with no internal valve. As compressed air was passed through the venturi section of the aspirator, the fibers were pushed out of the aspirator and deposited on the layer of mixture in a random manner. The deposited fibers were pushed into the mixture and a second layer of mixture was added on top of the fibers. A second layer and third layer of fibers were added similarly. The resulting combination spontaneously generated heat and formed a composite. The resulting composite contained three layers comprising 24 g of fibers and had a thickness of 1.6 cm (5/8 in). The composite contained no visible voids. The bottom layer of fibers was 3 to 4 mm from the bottom face of the composite.

Test pieces of the composite measuring 5.1 x 5.1 cm (2 x 2 in) were cut from the composite and the edges were painted with a solution of 15% polymethyl methacrylate in methylene chloride. A 1.3 cm (1/2 in) thick piece of similar fiber free material was prepared as described above. The composite and the fiber free material were subjected to falling dart impact tests. The composite did not break or crack under 115 Kg cm (11.3 Nm or 100 in lbs) but did shatter under 138 Kg cm (13.5 Nm or 120 in lbs). The fiber free material did not shatter under 46 Kg cm (3.9 Nm or 40 in lbs), but did shatter under 58 Kg cm (4.9 Nm or 50 in lbs).

### Example 3

This Example shows that the composites of the invention can be hot formed, The composite was made as described in Example 2 and contained 3% fibers which were located on one side of a 0.63 cm (1/4 in.) thick piece. Corian® (E. I. du Pont de Nemours & Co.. Inc., Wilmington, Delaware), a fiber free polymer matrix containing filler material, was used for comparative testing.

Pieces of Corian® sheet, either 0.63 or 1.27 cm (1/4 or 1/2 in) thick, were softened at 140° and bent. The sections under stress slowly tore.

Pieces of the composite in accordance with the present invention were similarly heated and bent into "U" shapes. No tears in the composite resulted from the bending, whether the fibers were closest to the inside or outside of the resulting "U".

The piece of composite was also tested by the Gardner Falling Dart Test. Cracks developed on the side opposite to that to which the fibers were closest when the material received 0.9 Nm (8 in lbs) or 1.36 Nm (12 in lbs) of impact. The material shattered when subjected to 1.81 Nm (16 in lbs) of impact.

## Claims

1. An impact resistant, heat formable composite comprising
- a polymer selected from the group consisting of addition polymers and addition copolymers,
- fillers selected from the group consisting of metal oxide, metal carbonate and mixtures thereof, provided said metal is not an alkali metal and
- oriented thermoplastic elastomeric fibers having a draw ratio of 1.2 to 4.5 characterised in that the composite contains 30 to 80 % by weight, based on the composite, of one or more fillers.

2. The composite of Claim 1 wherein the addition polymer is selected from the group consisting of polystyrene, polymethacrylate esters, polyacrylate esters, thermoset polyester, and epoxy resin.

3. The composite of Claim 2 wherein the polymethacrylate ester is polymethyl methacrylate or polybutyl methacrylate and the polyacrylate ester is polyethyl acrylate or polybutyl acrylate.

4. The composite of Claim 1 wherein the addition copolymers is selected from the group consisting of copolymers of methyl methacrylate and butyl methacrylate, copolymers of styrene and methyl methacrylate, and copolymers of methyl methacrylate and a polyfunctional addition monomer.

5. A composite of Claim 1 wherein the addition polymer is selected from the group consisting of polystyrene and polymethyl methacrylate.

6. The composite of Claim 1 wherein the addition polymer is polymethyl methacrylate.

7. The composite of Claim 1 wherein the addition copolymer is a copolymer of methyl methacrylate and a polyfunctional addition monomer.

8. The composite of Claim 7 wherein the polyfunctional addition monomer is a compound of the formula 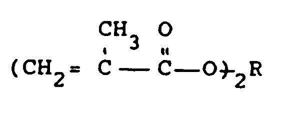 wherein
R is 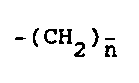 wherein n > 1.

9. The composite of Claim 8 wherein n=2.

10. The composite of Claim 1 wherein the metal oxide is selected from the group consisting of Al₂O₃ · 3H₂O, Al₂O₃, SiO₂, mixtures thereof, and [Al₂O₃] · [SiO₂] · XH₂O where n is an integer from 1 to 7.4, and X is an integer from 0 to 4.

11. The composite of Claim 10 wherein the metal oxide is Al₂O₃ · 3H₂O.

12. The composite of Claim 1 wherein the metal carbonate is selected from the group consisting of CaCO₃, MgCO₃, ZnCO₃ and mixtures thereof.

13. The composite of Claim 12 wherein the metal carbonate is CaCO₃.

14. The composite of Claim 1 wherein the oriented thermoplastic elastomeric fibers are selected from the group consisting of polyester elastomers, polyester/polyether elastomers, polyamide/polyester/polyether elastomers, and polyester/polyurethane elastomers.

15. The composite of Claim 14 wherein the thermoplastic elastomeric fibers are polyester/polyether elastomers.

16. The composite of Claim 7 wherein the filler is Al₂O₃ · 3H₂O or CaCO₃.

17. The composite of Claim 8 wherein the filler is Al₂O₃ · 3H₂O or CaCO₃.

18. The composite of Claim 9 wherein the filler is Al₂O₃ · 3H₂O.

19. The composite of Claim 19 wherein the thermoplastic elastomeric monomer 16 polyester/polyether elastomer.

## Patentansprüche

1. Stoßfester, warm verformbarer Verbundstoff, umfassend:
- ein Polymer, das aus der Gruppe ausgewählt ist, die aus Additionspolymeren und Additionscopolymeren besteht,
- Füllstoffe, die aus der Gruppe ausgewählt sind, die aus Metalloxid, Metallcarbonat und Gemischen davon besteht, mit der Maßgabe, daß das Metall kein Alkalimetall ist, sowie
- orientierte thermoplastische elastomere Fasern mit einem Reckverhältnis zwischen 1,2 und 4,5, dadurch gekennzeichnet, daß der Verbundstoff 30 bis 80 Gew. - %, bezogen auf den Verbundstoff, eines oder mehrerer Füllstoffe enthält.

2. Verbundstoff gemäß Anspruch 1, worin das Additionspolymer aus der Gruppe ausgewählt ist, die aus Polystyrol, Polymethacrylatestern, Polyacrylatestern, duroplastischem Polyester und Epoxidharz besteht.

3. Verbundstoff gemäß Anspruch 2, worin es sich bei dem Polymethacrylatester um Polymethylmethacrylat oder Polybutylmethacrylat und bei dem Polyacrylatester um Polyethylacrylat oder Polybutylacrylat handelt.

4. Verbundstoff gemäß Anspruch 1, worin das Additionscopolymer aus der Gruppe ausgewählt ist, bestehend aus Copolymeren von Methylmethacrylat und Butylmethacrylat, Copolymeren von Styrol und Methylmethacrylat sowie Copolymeren von Methylmethacrylat und einem polyfunktionellen Additionsmonomer.

5. Verbundstoff gemäß Anspruch 1, worin das Additionspolymer aus der Gruppe ausgewählt ist, die aus Polystyrol und Polymethylmethacrylat besteht.

6. Verbundstoff gemäß Anspruch 1, worin es sich bei dem Additionspolymer um Polymethylmethacrylat handelt.

7. Verbundstoff gemäß Anspruch 1, worin es sich bei dem Additionscopolymer um ein Copolymer von Methylmethacrylat und einem polyfunktionellen Additionsmonomer handelt.

8. Verbundstoff gemäß Anspruch 7, worin es sich bei dem polyfunktionellen Additionsmonomer um eine Verbindung handelt mit der Formel 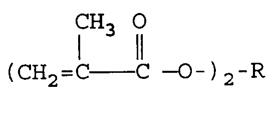 worin
R -(CH₂)ₙ- ist,
worin n > 1.

9. Verbundstoff gemäß Anspruch 8, worin n=2 ist.

10. Verbundstoff gemäß Anspruch 1, worin das Metalloxid ausgewählt ist aus der Gruppe, bestehend aus Al₂O₃·3H₂O, Al₂O₃, SiO₂, Gemischen davon und [Al₂O₃] · [SiO₂]ₙ·xH₂O, worin n eine ganze Zahl von 1 bis 7,4 ist und x eine ganze Zahl von 0 bis 4 ist.

11. Verbundstoff gemäß Anspruch 10, worin es sich bei dem Metalloxid um Al₂O₃·3H₂O handelt.

12. Verbundstoff gemäß Anspruch 1, worin das Metallcarbonat ausgewählt ist aus der Gruppe, bestehend aus CaCO₃, MgCO₃, ZnCO₃ und Gemischen davon.

13. Verbundstoff gemäß Anspruch 12, worin es sich bei dem Metallcarbonat um CaCO₃ handelt.

14. Verbundstoff gemäß Anspruch 1, worin die orientierten thermoplastischen elastomeren Fasern ausgewählt sind aus der Gruppe, bestehend aus Polyesterelastomeren, Polyester/Polyether-Elastomeren, Polyamid/Polyester/Polyether-Elastomeren und Polyester/Polyurethan-Elastomeren.

15. Verbundstoff gemäß Anspruch 14, worin es sich bei den thermoplastischen elastomeren Fasern um Polyester/Polyether-Elastomere handelt.

16. Verbundstoff gemäß Anspruch 7, worin es sich bei dem Füllstoff um Al₂O₃·3H₂O oder CaCO₃ handelt.

17. Verbundstoff gemäß Anspruch 8, worin es sich bei dem Füllstoff um Al₂O₃·3H₂O oder CaCO₃ handelt.

18. Verbundstoff gemäß Anspruch 9, worin es sich bei dem Füllstoff um Al₂O₃·3H₂O handelt.

19. Verbundstoff gemäß Anspruch 18, worin es sich bei dem thermoplastischen elastomeren Monomer um Polyester/Polyether-Elastomer handelt.

## Revendications

1. Composite thermoformable, résistant au choc, comprenant
- un polymère choisi dans le groupe constitué des polymères d'addition et des copolymères d'addition,
- des charges choisies dans le groupe constitué d'un oxyde de métal, d'un carbonate de métal et des mélanges de ceux-ci, à condition que ledit métal ne soit pas un métal alcalin, et
- des fibres élastomères thermoplastiques orientées ayant un rapport d'étirage de 1,2 à 4,5, caractérisé en ce que le composite contient 30 à 80 % en poids, sur la base du composite, d'une ou plusieurs charges.

2. Composite selon la revendication 1, dans lequel le polymère d'addition est choisi dans le groupe constitué du polystyrène, des esters polyméthacrylates, des esters polyacrylates, du polyester thermodurci, et d'une résine époxyde.

3. Composite selon la revendication 2, dans lequel l'ester polyméthacrylate est le polyméthacrylate de méthyle ou le polyméthacrylate de butyle et l'ester polyacrylate est le polyacrylate d'éthyle ou le polyacrylate de butyle.

4. Composite selon la revendication 1, dans lequel le copolymère d'addition est choisi dans le groupe constitué des copolymères du mèthacrylate de méthyle et du méthacrylate de butyle, des copolymères du styrène et du méthacrylate de méthyle, et des copolymères du mèthacrylate de méthyle et d'un monomère d'addition polyfonctionnel.

5. Composite selon la revendication 1, dans lequel le polymère d'addition est choisi dans le groupe constitue du polystyrène et du polyméthacrylate de méthyle.

6. Composite selon la revendication 1, dans lequel le polymère d'addition est le polyméthacrylate de méthyle.

7. Composite selon la revendication 1, dans lequel le copolymère d'addition est un copolymère du méthacrylate de méthyle et d'un monomère d'addition polyfonctionnel,

8. Composite selon la revendication 7, dans lequel le monomère d'addition polyfonctionnel est un composé de la formule 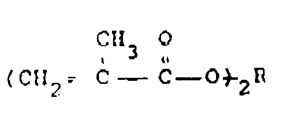 où R est -(CH₂)ₙ-
où n > 1.

9. Composite selon la revendication 8, dans lequel n=2.

10. Composite selon la revendication 1, dans lequel l'oxyde de métal est choisi dans le groupe constitué de Al₂O₃ · 3H₂O, Al₂O₃, SiO₂, des mélanges de ceux-ci, et de [Al₂O₃] · [SiO₂] · XH₂O, où n est un nombre entier de 1 à 7,4, et X est un nombre entier de 0 à 4.

11. Composite selon la revendication 10, dans lequel l'oxyde de métal est Al₂O₃ · 3H₂O.

12. Composite selon la revendication 1, dans lequel le carbonate de métal est choisi dans le groupe constitué de CaCO₃, MgCo₃, ZnCO₃ et des mélanges de ceux-ci.

13. Composite selon le revendication 12, dans lequel le carbonate de métal est CaCO₃.

14. Composite selon la revendication 1, dans lequel les fibres élastomères thermoplastiques orientées sont choisies dans le groupe constitué des élastomères polyester, des élastomères polyester/polyéther, des élastomères polyamide/polyester/polyéther, et des élastomères polyester/polyuréthanne.

15. Composite selon la revendication 14, dans lequel les fibres élastoméres thermoplastiques sont des élastomères polyester/polyéther.

16. Composite selon la revendication 7, dans lequel la charge est Al₂O₃ · 3H₂O ou CaCO₃.

17. Composite selon la revendication 8, dans lequel la charge est Al₂O₃ · 3H₂O ou CaCO₃.

18. Composite selon la revendication 9, dans lequel la charge est Al₂O₃ · 3H₂O.

19. Composite selon la revendication 18, dans lequel le monomère élastomère thermoplastique est un élastomère polyester/polyéther.
